# EUROPEAN PATENT APPLICATION

(11) **EP 1 657 632 A1**
(43) Date of publication of application: **17.05.2006**
(21) Application number: 05292389.3
(22) Date of filing: 10.11.2005
(51) Int. Cl.: G06F 3/12

(54) **Method and system for performing a printing process, method and apparatus for processing information, print server and method of performing a printing process in print server, and program**

(30) Priority: 11.11.2004 JP 2004327881
(71) Applicant: SONY CORPORATION, Tokyo (JP)
(72) Inventor: Morita, Tadashi, Sony Corporation, Tokyo (JP)
(74) Representative: Thévenet, Jean-Bruno

(57) **Abstract**

In a print processing system (1) including an information processing apparatus (12) and a print server (13-1) capable of communicating with the information processing apparatus (12) via a network (11), the information processing apparatus (12) generates a first signature from original data specified to be printed, and write the generated first signature into an IC card (21). The original data is transmitted to the print server (13-1) via the network (11). In the print server (13-1), a second signature is calculated from the original data received from the information processing apparatus (12), and is compared with the first signature read from the IC card (21). If the comparison indicates that the first signature is identical to the second signature, a printer prints (14-1) the original data received from the information processing apparatus (12).

## Description

### BACKGROUND OF THE INVENTION

### 1. Field of the Invention

The present invention relates to a method and system for performing a printing process, a method and apparatus for processing information, a print server and a method of performing a printing process in a print server, and a program. More particularly, the present invention relates to a method and system for performing a printing process, a method and apparatus for processing information, a print server and a method of performing a printing process in a print server, and a program, which allow it to perform printing in a secure fashion without needing complicated management.

### 2. Description of the Related Art

In a known printing technique, in accordance with a print command issued by a user, a personal computer transmits a print command and original data in the form of electronic data according to which to produce a printed matter to a print server. The print server spools the received original data in a queue. If the turn of this original data comes, a print prints the original data.

However, printing is not always completed at a predicted time. Therefore, there is a possibility that when a predicted print-completion time comes and a user who issued a print command comes to a location of a printer to acquire a printed matter, the printing was already completed and the resultant printed matter was stolen by someone.

To prevent the above problem, Japanese Unexamined Patent Application Publication No. 2002-24398 discloses a technique of adding a user ID to original data to limit a printing operation.

### SUMMARY OF THE INVENTION

However, in the technique disclosed in Japanese Unexamined Patent Application Publication No. 2002-24398, it is needed to manage the user ID while keeping it secret. If the user ID is leaked out, original data is exposed to the risk of being leaked out. Another problem is that there is no link between original data to be printed and a print command, and thus any spooled data with a user ID identical to a specified user ID is printed without selecting particular original data. Thus, it is not possible to specify particular original data to be printed when printing is actually performed. A still another problem is that once a print command is issued and original data to be printed is transmitted to print server, the original data is allowed to be printed only by a printer connected to that print server. That is, after the print command is issued, it is impossible to change the printer used to print the original data.

According to embodiments of the present invention, there is provided a technique to perform printing in a secure fashion without needing complicated and troublesome management.

More specifically, according to an embodiment of the present invention, there is provided a print processing system including an information processing apparatus and a print server adapted to communicate with the information processing apparatus via a network, in which the information processing apparatus includes first signature generation means for generating, in accordance with a print command issued by a user, a first signature from original data in the form of electronic data according to which to perform printing, writing means for writing the first signature generated by the first signature generation means into an IC card, and transmission means for transmitting the original data to the print server via the network, the print server includes receiving means for receiving the original data transmitted from the transmission means, reading means for reading the first signature written in the IC card, second signature generation means for generating a second signature from the original data received by the receiving means, first determination means for determining whether the first signature read by the reading means is identical to the second signature generated by the second signature generation means, and print control means for controlling a printer such that the printer prints the original data received by the receiving means if the first determination means determines that the first signature is identical to the second signature.

In this print processing system, the writing means of the information processing apparatus may further write, into the IC card, associated information including a print server ID identifying the print server to which the original data is transmitted by the transmission means, the print server may further include second determination means for determining whether the print server ID included in the associated information read by the reading means from the IC card is identical to the print server ID of the present print server, and acquisition means for, when the second determination means makes a negative determination as to the equivalence of the print server IDs, acquiring the original data via the network from a print server identified by the print server ID included in the associated information read by the reading means from the IC card, the second signature generation means may generate a second signature from the original data acquired by the acquisition means, the first determination means may determine whether the first signature is identical to the second signature, and the print control means may control the printer such that the printer prints the original data acquired by the acquisition means if the first determination means determines that the first signature is identical to the second signature.

The first signature generation means may generate the first signature by applying a hash function to the original data, and the second signature generation means may generate the second signature by applying a hash function to the original data.

In this print processing system, the information processing apparatus may further include encryption means for encrypting the original data using a first key, the print server may further include decryption means for decrypting the original data encrypted by the encryption means, by using the first key, the writing means may further write the first key into the IC card, the transmission means may transmit the original data encrypted by the encryption means, the receiving means of the print server may receive the encrypted original data, the reading means may read the first key written in the IC card, and the decryption means may decrypt the encrypted original data by using the first key read by the reading means.

The print server may further include a printer.

According to an embodiment of the present invention, there is provided a method of performing a printing process in a print processing system including an information processing apparatus and a print server adapted to communicate with the information processing apparatus via a network, the printing process including a process performed by the information processing apparatus and a process performed by the print server, the process performed by the information processing apparatus including the steps of generating, in accordance with a print command issued by a user, a first signature from original data in the form of electronic data according to which to perform printing, writing the first signature generated in the first signature generation step into an IC card, and transmitting the original data to the print server via the network, and the print server performs a process including the steps of receiving the original data transmitted in the transmission step, reading the first signature written in the IC card, generating a second signature from the original data received in the receiving step, determining whether the first signature read in the reading step is identical to the second signature generated in the second signature generation step, and controlling a printer such that the printer prints the original data received in the receiving step if it is determined in the determination step that the first signature is identical to the second signature.

In the print processing system and the method of performing the printing process according to embodiments of the invention, the information processing apparatus generates the first signature from the original data in the form of electronic data according to which to perform printing and writes the generated first signature into the IC card. The original data is transmitted to the print server. If the print server receives the original data, the first signature is read from the IC card, and the second signature is generated from the received original data. If the first signature is identical to the second signature, the printer is controlled to print the original data.

According to an embodiment of the present invention, there is provided an information processing apparatus including signature generation means for generating, in accordance with a print command issued by a user, a signature from original data in the form of electronic data according to which to perform printing, writing means for writing the signature generated by the signature generation means into an IC card, and transmission means for transmitting the original data to the print server via the network.

In this information processing apparatus, the signature generation means may generate the signature by applying a hash function to the original data.

The information processing apparatus may further include encryption means for encrypting the original data using a particular encryption key, the writing means may further write the encryption key into the IC card, and the transmission means may transmit the original data encrypted by the encryption means to the print server.

According to an embodiment of the present invention, there is provided an information processing method including the steps of generating, in accordance with a print command issued by a user, a signature from original data in the form of electronic data according to which to perform printing, writing the signature generated in the signature generation step into an IC card, and transmitting the original data to a print server via a network.

According to an embodiment of the present invention, there is provided a program that causes a computer to execute a process including the steps of generating, in accordance with a print command issued by a user, a signature from original data in the form of electronic data according to which to perform printing, writing the signature generated in the signature generation step into an IC card, and transmitting the original data to a print server via a network.

In the information processing apparatus, the information processing method, and the program according to embodiments of the invention, a signature is generated from original data in the form of electronic data according to which to perform printing and written into the IC card. The original data is transmitted to the print server.

According to an embodiment of the present invention, there is provided a print server including receiving means for receiving original data in the form of electronic data according to which to perform printing, from an information processing apparatus via a network, reading means for reading a first signature corresponding to the original data from an IC card, signature generation means for generating a second signature from the original data received by the receiving means, first determination means for determining whether the first signature read by the reading means is identical to the second signature generated by the signature generation means, and print control means for controlling a printer such that the printer prints the original data received by the receiving means if the first determination means determines that the first signature is identical to the second signature.

In this print server, the reading means may further read, from the IC card, associated information including a print server ID identifying the print server to which the original data is transmitted, the print server may further include second determination means for determining whether the print server ID included in the associated information read by the reading means from the IC card is identical to the print server ID of the present print server, and acquisition means for, when the second determination means makes a negative determination as to the equivalence of the print server IDs, acquiring the original data via the network from a print server identified by the print server ID included in the associated information read by the reading means from the IC card, the signature generation means may generate a second signature from the original data acquired by the acquisition means, the first determination means may determine whether the first signature is identical to the second signature, and the print control means may control the printer such that the printer prints the original data acquired by the acquisition means if the first determination means determines that the first signature is identical to the second signature.

The signature generation means may generate the second signature by applying a hash function to the original data.

The print server may further include decryption means for decrypting, using an encryption key, the original data encrypted using the encryption key, the receiving means may receive the original data encrypted using the encryption key, the reading means may read the encryption key written in the IC card, and the decryption means may decrypt the encrypted original data by using the encryption key read by the reading means.

The print server may further include a printer.

According to an embodiment of the present invention, there is provided an information processing method including the steps of receiving original data in the form of electronic data according to which to perform printing, from an information processing apparatus via a network, reading a first signature corresponding to the original data from an IC card, generating a second signature from the original data received in the receiving step, determining whether the first signature read in the reading step is identical to the second signature generated in the signature generation step, and controlling a printer such that the printer prints the original data received in the receiving step if it is determined in the determination step that the first signature is identical to the second signature.

According to an embodiment of the present invention, there is provided a program that causes a computer to execute a process including the steps of receiving original data in the form of electronic data according to which to perform printing, from an information processing apparatus via a network, reading a first signature corresponding to the original data from an IC card, generating a second signature from the original data received in the receiving step, determining whether the first signature read in the reading step is identical to the second signature generated in the signature generation step, and controlling a printer such that the printer prints the original data received in the receiving step if it is determined in the determination step that the first signature is identical to the second signature.

In the print server, the information processing method, and the program according to embodiments of the invention, original data, which is electronic data used to produce a printed matter, is received from the information processing apparatus via the network, and the first signature associated with the original data is read from the IC card. The second signature is generated from the received original data and is compared with the first signature. If these two signatures are identical to each other, the original data is printed.

The present invention provides great advantages as described below. That is, printing can be easily performed in a very secure fashion. In the printing process, the original data can be easily managed to protect the original data. Printing is allowed to be performed at a location other than an originally specified location.

### BRIEF DESCRIPTION OF THE DRAWINGS

Fig. 1 is a diagram showing an example of a general structure of a print processing system according to an embodiment of the present invention;
Fig. 2 is a diagram showing an example of a hardware structure of a personal computer shown in Fig. 1;
Fig. 3 is a diagram showing an example of a hardware structure of a print server shown in Fig. 1;
Fig. 4 is a flow chart showing an example of an outline of a printing process performed by the print processing system shown in Fig. 1;
Fig. 5 is a flow chart showing another example of an outline of a printing process performed by the print processing system shown in Fig. 1;
Fig. 6 is a flow chart showing a process performed by the personal computer shown in Fig. 2;
Fig. 7 is a flow chart showing a process performed by the print server shown in Fig. 3 to receive original data;
Fig. 8 is a flow chart showing a printing process performed by the print server shown in Fig. 3;
Fig. 9 is a flow chart showing a printing process performed by the print server shown in Fig. 3; and
Fig. 10 is a flow chart showing a process performed by the print server shown in Fig. 3 to transfer original data.

### DESCRIPTION OF THE PREFERRED EMBODIMENTS

Before describing embodiments of the present invention, the correspondence between the features of the claims and the specific embodiments of the present invention is discussed below. This description is intended to assure that embodiments supporting the claimed invention are described in this specification. Thus, even if an embodiment is not described as relating to a certain feature of the present invention, that does not necessarily mean that the embodiment does not relate to that feature of the claims. Conversely, even if an embodiment is described herein as relating to a certain feature of the claims, that does not necessarily mean that the embodiment does not relate to other features of the claims.

Furthermore, this description should not be construed as restricting that all the aspects of the invention disclosed in the embodiments are described in the claims. That is, the description does not deny the existence of aspects of the present invention that are described in the embodiments but not claimed in the invention of this application, i.e., the existence of aspects of the present invention that in future may be claimed by a divisional application, or that may be additionally claimed through amendments.

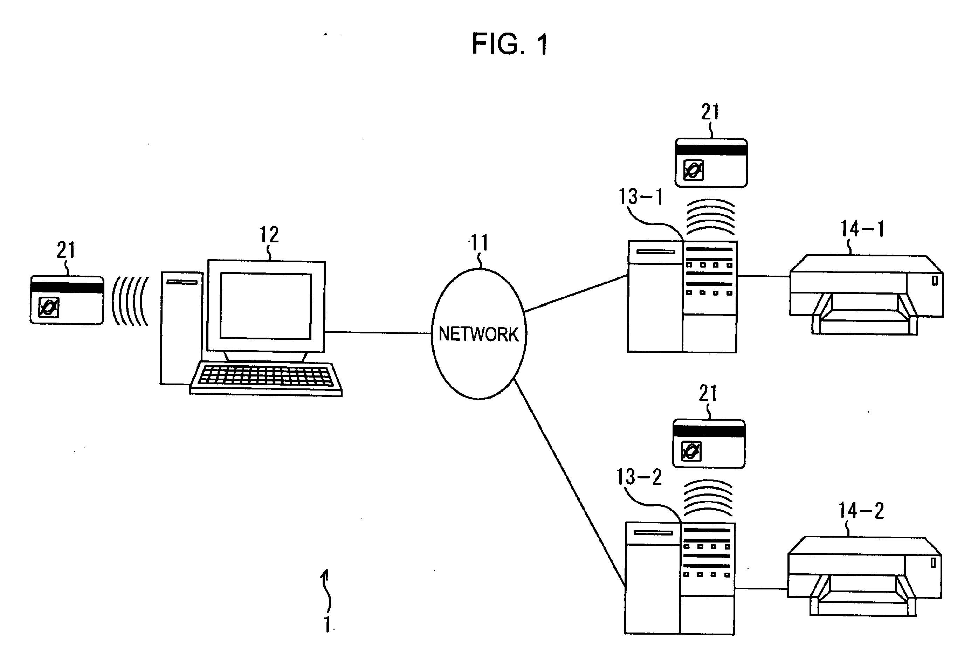

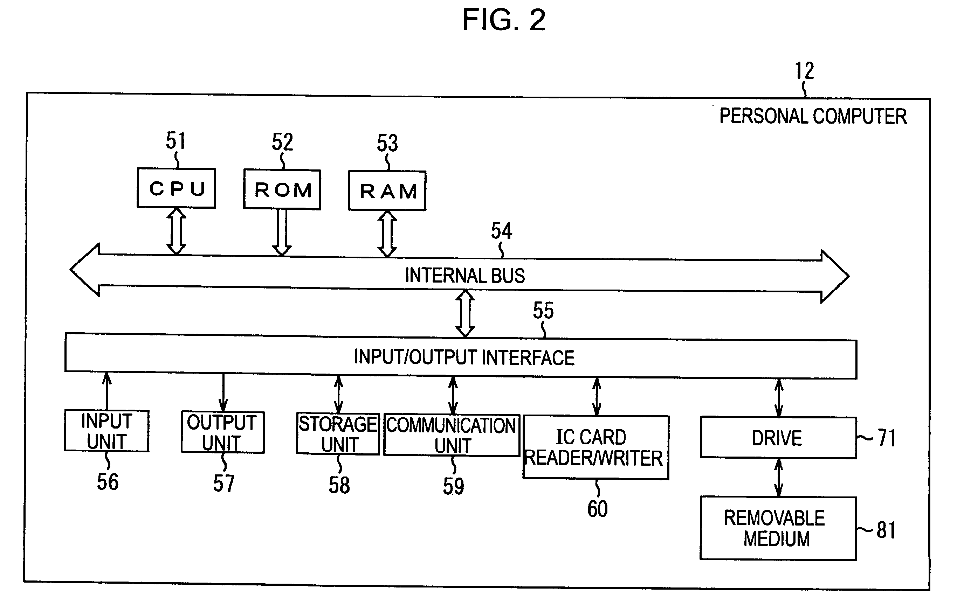

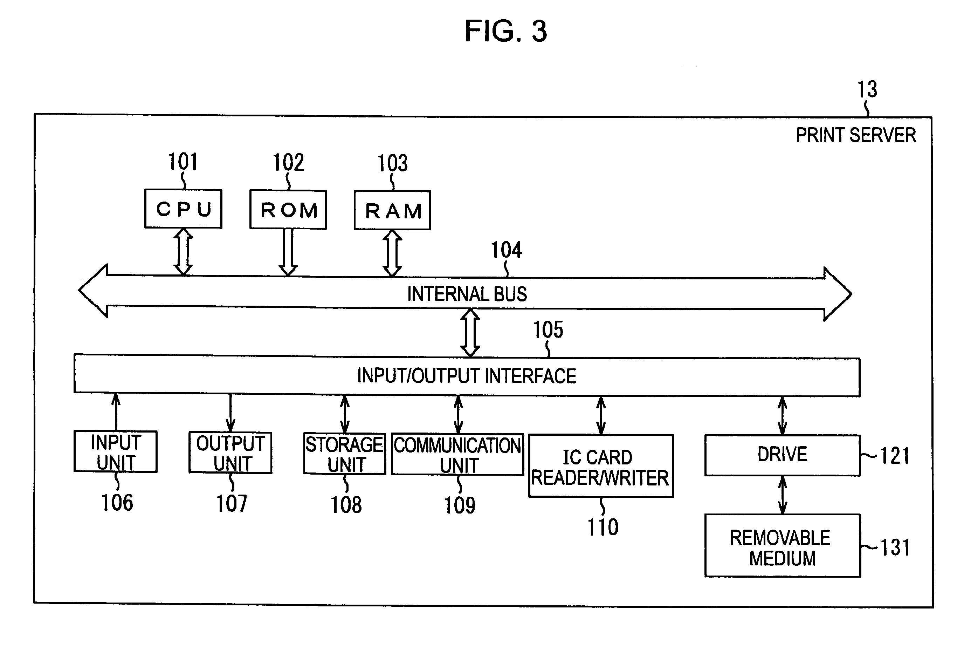

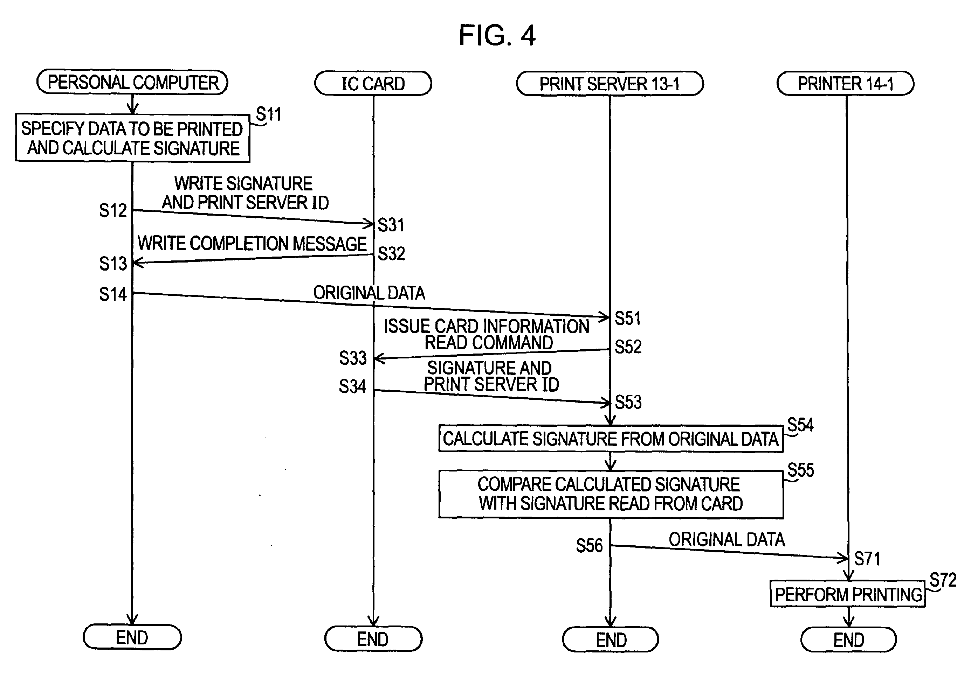

According to an embodiment of the present invention, there is provided a print processing system (for example, a print processing system 1 shown in Fig. 1) including an information processing apparatus (for example, a personal computer 12 shown in Fig. 1) and a print server (for example, a print server 13-1 shown in Fig. 1) adapted to communicate with the information processing apparatus via a network (for example, a network 11 shown in Fig. 1). In this print processing system, the information processing apparatus includes first signature generation means (for example, a CPU 51 (shown in Fig. 2) that executes step S11 (shown in Fig. 4)) for generating, in accordance with a print command issued by a user, a first signature from original data in the form of electronic data according to which to perform printing, writing means (for example, an IC card reader/writer 60 (shown in Fig. 2) adapted to perform a step S31 (shown in Fig. 4)) for writing the first signature generated by the first signature generation means into an IC card, and transmission means (for example, a communication unit 59 (shown in Fig. 2) adapted to perform step S14 (shown in Fig. 4)) for transmitting the original data to the print server via the network, The print server includes receiving means (for example, a communication unit 109 (shown in Fig. 3) adapted to perform step S51 (shown in Fig. 4)) for receiving the original data transmitted from the transmission means, reading means (for example, an IC card reader/writer 110 (shown in Fig. 3) adapted to perform steps S52 and S53 (shown in Fig. 4)) for reading the first signature written in the IC card, second signature generation means (for example, a CPU 101 (shown in Fig. 3) adapted to perform step S54 (shown in Fig. 4)) for generating a second signature from the original data received by the receiving means, first determination means (for example, a CPU 101 (shown in Fig. 3) adapted to perform step S55 (shown in Fig. 4)) for determining whether the first signature read by the reading means is identical to the second signature generated by the second signature generation means, and print control means (for example, a CPU 101 (shown in Fig. 3) adapted to perform step S56 (shown in Fig. 4)) for controlling a printer such that the printer prints the original data received by the receiving means if the first determination means determines that the first signature is identical to the second signature.

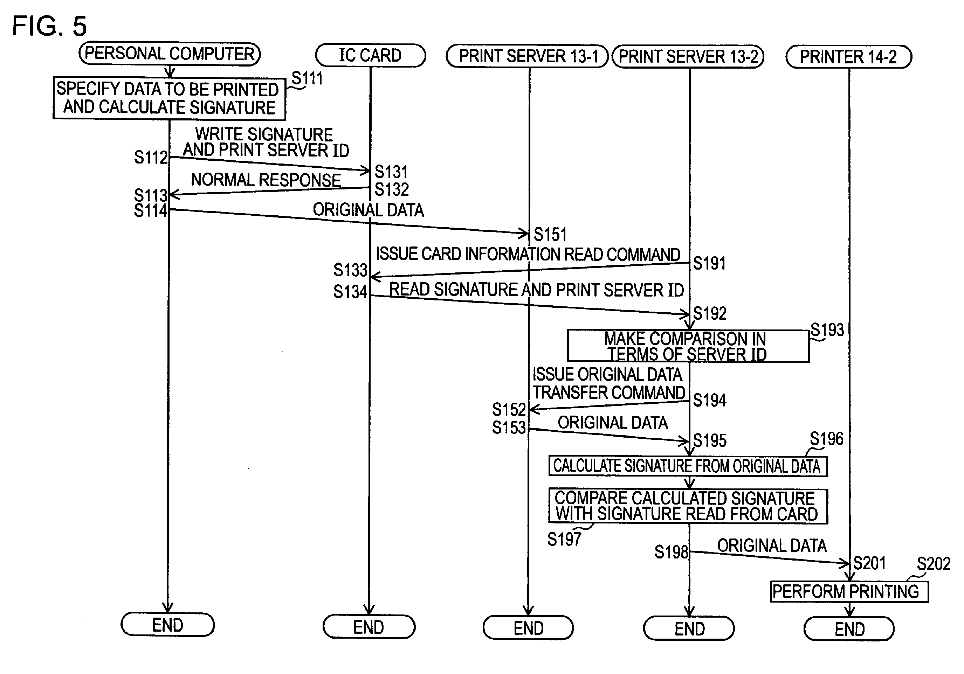

In this print processing system, the writing means of the information processing apparatus may further write, into the IC card, associated information including a print server ID identifying the print server to which the original data is transmitted by the transmission means, the print server (for example, a print server 13-2 shown in Fig. 5) may further include second determination means (for example, a CPU 101 (shown in Fig. 3) adapted to perform step S193 (shown in Fig. 5)) for determining whether the print server ID included in the associated information read by the reading means from the IC card is identical to the print server ID of the present print server, and acquisition means (for example, a CPU 101 (shown in Fig. 3) adapted to perform steps S294 and S195 (shown in Fig. 5)) for, when the second determination means makes a negative determination as to the equivalence of the print server IDs, acquiring the original data via the network from a print server identified by the print server ID included in the associated information read by the reading means from the IC card, the second signature generation means may generate a second signature from the original data acquired by the acquisition means, the first determination means may determine whether the first signature is identical to the second signature, and the print control means may control a printer such that the printer prints the original data acquired by the acquisition means if the first determination means determines that the first signature is identical to the second signature.

According to an embodiment of the present invention, there is provided a method of performing a printing process in a print processing system (for example, the print processing system 1 shown in Fig. 1) including an information processing apparatus (for example, the personal computer 12 shown in Fig. 1) and a print server (for example, the print server 13-1 shown in Fig. 1) adapted to communicate with the information processing apparatus via a network, the printing process including a process performed by the information processing apparatus and a process performed by the print server, the process performed by the information processing apparatus including the steps of generating, in accordance with a print command issued by a user, a first signature from original data in the form of electronic data according to which to perform printing (for example, in step S11 shown in Fig. 4), writing the first signature generated in the first signature generation step into an IC card (for example, in step S31 shown in Fig. 4), and transmitting the original data to the print server via the network (for example, in step S14 shown in Fig. 4), the process performed by the print server including the steps of receiving the original data transmitted in the transmission step (for example, in step S51 shown in Fig. 4), reading the first signature written in the IC card (for example, in steps S52 and S53 shown in Fig. 4), generating a second signature from the original data received in the receiving step (for example, in step S54 shown in Fig. 4), determining whether the first signature read in the reading step is identical to the second signature generated in the second signature generation step (for example, in step S55 shown in Fig. 4), and controlling a printer such that the printer prints the original data received in the receiving step if it is determined in the determination step that the first signature is identical to the second signature (for example, in step S56 shown in Fig. 4).

According to an embodiment of the present invention, there is provided an information processing apparatus (for example, the personal computer 12 shown in Fig. 1) including signature generation means (for example, a CPU 51 (shown in Fig. 2) that executes a step S11 (shown in Fig. 4)) for generating, in accordance with a print command issued by a user, a signature from original data in the form of electronic data according to which to perform printing, writing means (for example, an IC card reader/writer 60 (shown in Fig. 2) adapted to perform a step S31 (shown in Fig. 4)) for writing the signature generated by the signature generation means into an IC card, and transmission means (for example, a communication unit 59 (shown in Fig. 2) adapted to perform step S14 (shown in Fig. 4)) for transmitting the original data to the print server via the network.

According to an embodiment of the present invention, there is provided a method of processing information in an information processing apparatus (for example, the personal computer 12 shown in Fig. 1), the method including the steps of generating, in accordance with a print command issued by a user, a signature from original data in the form of electronic data according to which to perform printing (for example, in step S11 shown in Fig. 4), writing the signature generated in the signature generation step into an IC card (for example, in step S31 shown in Fig. 4), and transmitting the original data to the print server via the network (for example, in step S14 shown in Fig. 4).

According to an embodiment of the present invention, there is provided a program that causes a computer to execute a process including the steps of generating, in accordance with a print command issued by a user, a signature from original data in the form of electronic data according to which to perform printing (for example, in step S11 shown in Fig. 4), writing the signature generated in the signature generation step into an IC card (for example, in step S31 shown in Fig. 4), and transmitting the original data to the print server via the network (for example, in step S14 shown in Fig. 4).

According to an embodiment of the present invention, there is provided a print server (for example, a print server 13 shown in Fig. 1) including receiving means (for example, a communication unit 109 adapted to perform a process in step S52 shown in Fig. 4) for receiving original data in the form of electronic data according to which to perform printing, from an information processing apparatus via a network (for example, the network 11 shown in Fig. 1), reading means (for example, then IC card reader/writer 110 (shown in Fig. 3) adapted to perform steps S52 and S53 (shown in Fig. 4)) for reading a first signature corresponding to the original data from an IC card, signature generation means (for example, the CPU 101 (shown in Fig. 3) adapted to perform step S54 (shown in Fig. 4)) for generating a second signature from the original data received by the receiving means, first determination means (for example, the CPU 101 (shown in Fig. 3) adapted to perform step S55 (shown in Fig. 4)) for determining whether the first signature read by the reading means is identical to the second signature generated by the signature generation means, and print control means (for example, the CPU 101 (shown in Fig. 3) adapted to perform step S56 (shown in Fig. 4)) for controlling a printer such that the printer prints the original data received by the receiving means if the first determination means determines that the first signature is identical to the second signature.

In this print server, the reading means may further read, from the IC card, associated information including a print server ID identifying the print server to which the original data is transmitted, the print server may further include second determination means (for example, the CPU 101 (shown in Fig. 3) adapted to perform step S193 (shown in Fig. 5)) for determining whether the print server ID included in the associated information read by the reading means from the IC card is identical to the print server ID of the present print server, and acquisition means (for example, the CPU 101 (shown in Fig. 3) adapted to perform steps S194 and S195 (shown in Fig. 5)) for, when the second determination means makes a negative determination as to the equivalence of the print server IDs, acquiring the original data via the network from a print server identified by the print server ID included in the associated information read by the reading means from the IC card, the signature generation means may generate a second signature from the original data acquired by the acquisition means, the first determination means may determine whether the first signature is identical to the second signature, the print control means may control a printer such that the printer prints the original data acquired by the acquisition means if the first determination means determines that the first signature is identical to the second signature.

According to an embodiment of the present invention, there is provided a method of processing information in a print server, the method including the steps of receiving original data in the form of electronic data according to which to perform printing, from an information processing apparatus via a network (for example, the network 11 shown in Fig. 1) (for example, in step S51 shown in Fig. 4), reading a first signature corresponding to the original data from an IC card (for example, in steps S52 and S53 shown in Fig. 4), generating a second signature from the original data received in the receiving step (for example, in step S54 shown in Fig. 4), determining whether the first signature read in the reading step is identical to the second signature generated in the signature generation step (for example, in step S55 shown in Fig. 4), and controlling a printer such that the printer prints the original data received in the receiving step if it is determined in the determination step that the first signature is identical to the second signature (for example, in step S56 shown in Fig. 4).

According to an embodiment of the present invention, there is provided a program that causes a computer to execute a process including the steps of receiving original data in the form of electronic data according to which to perform printing, from an information processing apparatus via a network (for example, the network 11 shown in Fig. 1) (for example, in step S51 shown in Fig. 4), reading a first signature corresponding to the original data from an IC card (for example, in steps S52 and S53 shown in Fig. 4), generating a second signature from the original data received in the receiving step (for example, in step S54 shown in Fig. 4), determining whether the first signature read in the reading step is identical to the second signature generated in the signature generation step (for example, in step S55 shown in Fig. 4), and controlling a printer such that the printer prints the original data received in the receiving step if it is determined in the determination step that the first signature is identical to the second signature (for example, in step S56 shown in Fig. 4).

The present invention is described in further detail below with reference to specific embodiments in conjunction with the accompanying drawings.

Fig. 1 is a diagram showing an example of a general structure of a print processing system 1 according to an embodiment of the present invention;

A personal computer 12, a print server 13-1, and a print server 13-2 are connected to a network 11. A printer 14-1 is connected to the print server 13-1, and a printer 14-2 is connected to the print server 13-2.

As for the network 11, various types of networks such as a LAN (Locate Area Network), a telephone line, and a CATV may be used. The personal computer 12, the print server 13-1 and the print server 13-2 each have an IC card reader/writer (not shown in Fig. 1) for communicating with an IC card 21. In the present embodiment, the IC card 21 is assumed to be of a non-contact type adapted to perform near-distance wireless communication using a weak radio wave via a terminal via a built-in antenna, although the IC card 21 may be of a contact type. When the IC card 21 is of the contact type, the terminal acquires data from the IC card 21 via contacts disposed on the IC card 21. In the following description, when it is not necessary to distinguish the print server 13-1 and the print server 13-2 from each other, a generic expression "print server 13" will be used. Similarly, when it is not necessary to distinguish the printer 14-1 and the printer 14-2 from each other, a generic expression "printer 14" will be used.

If the personal computer 12 receives a print command issued by a user together with original data in the form of electrical data to be printed, the personal computer 12 transmits the original data to a print server 13. The original data may be file data (such as a combination of text data and image data) according to which to produce a printed matter, or may be data produced by converting file data into image data. That is, there is no particular restriction on the type of the original data, as long as the original data is electronic data usable to produce a printed matter. Hereinafter, electronic data (print data) to be printed will be referred to as original data. The personal computer 12 generates a signature from the original data and writes the generated signature into the IC card 21. The print server 13 generates a signature based on the original data received from the personal computer 12 and compares the signature read from the IC card 21 with the signature generated based on the received original data. If they are identical, the print server 13 control a printer 14 to print the original data.

Referring to Fig. 2, an example of a hardware structure of the personal computer 12 shown in Fig. 1 is described.

A CPU (Central Processing Unit) 51, a ROM (Read Only Memory) 52, and a RAM (Random Access Memory) 53 are connected to each other via an internal bus 54. The bus 54 is also connected to an input/output interface 55.

The CPU 51 executes various processes in accordance with a program stored in the ROM 52 or a program loaded from a storage unit 58 into the RAM 53. The RAM 53 is also used to store data used by the CPU 51 in the execution of various processes.

The input/output interface 55 is also connected to an input unit 56 including a keyboard, a mouse, and the like, an output unit 57 including a display such as an LCD (Liquid Crystal Display) or a CRT (Cathode Ray Tube) and a speaker, a storage unit 58 such as a hard disk, a communication unit 59 such as a modem or a terminal adapter, and an IC card reader/writer 60. The communication unit 59 serves to perform communication via various types of networks such as a telephone line or a CATV. The IC card reader/writer 60 performs a near-distance communication with the IC card 21 (Fig. 1).

Furthermore, the input/output interface 55 is also connected to a drive 71, as required. A removable storage medium 81 such as a magnetic disk, an optical disk, a magnetooptical disk, or a semiconductor memory is mounted on the drive 71 as required, and a computer program is read from the removable storage medium 81 and installed into the storage unit 58, as required.

In the RAM 53, print server IDs identifying print servers 13 connected to the personal computer 12 via the network 11 are stored in the form of a table.

Referring to Fig. 3, an example of a hardware structure of the print server 13 shown in Fig. 1 is described.

The structure of the print server 13 shown in Fig. 3 is similar to that of the personal computer 12 shown in Fig. 2. That is, the print server 13 includes a CPU 101, a ROM 102, a RAM 103, an internal but 104, an input/output interface 105, an input unit 106, an output unit 107, a storage unit 108, a communication unit 109, an IC card reader/writer 110, and a drive 121, wherein parts having names similiar to those shown in Fig. 2 have similar functions.

In the ROM 102 of the storage unit 108, print server IDs (which are the same as those stored in the personal computer 12) identifying other print servers 13 connected to the present print server via the network 11 and the ID of the present print server are stored in the form of a table.

Note that the print server 13-1 and the print server 13-2 shown in Fig. 1 has the same structure shown in Fig. 3, which will be referred to, as required, in the following discussion.

Referring to a flow chart shown in Fig. 4, an example of an outline of a printing process performed in the print processing system is described below. This process starts when the user inputs a print command to the personal computer 12.

If the user inputs the print command and a command specifying original data to be used to produce a printed matter to the personal computer 12 via the input unit 56 (Fig. 2), then in step S11, the CPU 51 calculates (generates) a signature associated with the original data. More specifically, the CPU 51 generates (calculates) the signature associated with the original data by applying a particular function to the original data (print data) specified by the user to be used to produce the printed matter. The calculation of the signature is accomplished by using a function that results in a signature that changes if a change occurs in data (original data in the specific case of the present embodiment) to which the function is applied. Specific examples of such functions are a CRC (Cyclic Redundancy Check) function and one-way hash function. The print command issued by the user includes data specifying the print server 13-1 or 14-1 by which the printing is to be executed. The CPU 51 prepares data associated with printing, including data indicating the print-command issue time and the print server ID. The print server ID is identification (ID) information identifying the print server 13. That is, the print server ID identifies the print server 13 by which the printing is to be executed. The print server ID is set so as to identify the print server 13 specified by the user. In the example shown in Fig. 4, the print server 13-1 is specified by the user, and the print server ID is set to specify the print server 13-1.

After the user specifies the original data and issues the printer command, the user brings the IC card 21 to a location close to the IC card reader/writer 60 of the personal computer 12. In response, in step S12, the IC card reader/writer 60 of the personal computer 12 writes, under the control of the CPU 51, the signature and the associated data (including at least data indicating the print-command issue time and the print server ID) generated in step S11 into the IC card 21.

In step S31, in accordance with the write command issued by the personal computer 12, the IC card 21 writes the signature and the associated data into a memory (not shown) disposed in the IC card 21. In step S32, the IC card 21 returns a write-completion message (normal response) indicating that the writing of the signature and the associated data has been successfully completed to the IC card reader/writer 60 of the personal computer 12.

In step S13, if the IC card reader/writer 60 of the personal computer 12 receives the write-completion message transmitted by the IC card 21, the IC card reader/writer 60 transfers the received write-completion message to the CPU 51. In step S14, the CPU 51 of the personal computer 12 controls the communication unit 59 to transmit the original data and the data indicating the print-command issue time to the print server 13-1 specified by the user. Note that the print server 13 to which the original data and the data indicating the print-command issue time are transmitted is that identified by the print server ID set in step S11. That is, in the example shown in Fig. 4, the communication unit 59 transmits the original data to the print server 13-1 via the network 11.

In step S51, the original data transmitted from the personal computer 12 is received by the communication unit 109 (Fig. 3) of the print server 13-1. The CPU 101 of the print server 13-1 spools the original data in the RAM 103. By spooling, the original data is not directly transmitted to the printer 14-1 but is temporarily stored in the print server 13-1 before it is transmitted to the printer 14-1, that is, the original is put in a queue. The CPU 101 of the print server 13-1 stores the received print-command issue time in connection with the original data. Under the control of the CPU 101, the IC card reader/writer 110 of the print server 13-1 waits for the IC card 21 to be brought to a close position (that allows the IC card reader/writer 110 to communication with the IC card 21). The user comes to the location of the print server 13-1 specified as the print server for printing the original data and brings the IC card 21 to a position close to the IC card reader/writer 110 of the print server 13-1. If the user brings the IC card 21 to a position close to the IC card reader/writer 110 of the print server 13-1, then, in step S52, the IC card reader/writer 110 of the print server 13-1 issues a command to the IC card 21 to read card information stored in the memory (not shown) disposed in the IC card 21. Note that the signature of the original data and the associated data have been written, in step S31, in the memory of the IC card 21.

If the IC card 21 receives, in step S33, this command issued by the print server 13-1, then, in step S34, the IC card 21 reads the card information, that is, the signature and the associated data (including the data indicating the print-command issue time and the print server ID) written in the memory (not shown) and transmits the card information to the IC card reader/writer 110 of the print server 13-1.

In step S53, the IC card reader/writer 110 of the print server 13-1 receives the card information including the signature and the associated data returned from the IC card 21 as a response to the command issued in step S52. The received card information including the signature and the associated data is transferred to the CPU 101.

In step S54, the CPU 101 of the print server 13-1 calculates (generates) a signature based on the original data received in step S51. The calculation of the signature associated with the original data is performed in a similar manner to the calculation performed by the CPU 51 of the personal computer 12. Note that a valid signature can be obtained only when the original data is valid. In the case in which two or more original data are spooled in the print server 13-1, original data whose print-command issue time is identical to the print-command issue time described in the associated data read from the IC card 21 is retrieved from the spooled original data, and the signature is calculated from the retrieved original data.

In step S55, The CPU 101 of print server 13-1 compares the signature (first signature (read from the IC card 21)) acquired in the process of step S53 with the signature (second signature generated by the print server 13-1 based on the original data transmitted from the personal computer 12) generated as the calculation performed in step S54. If the signature (first signature) read from the IC card 21 is identical to the signature (second signature) generated by the CPU 101 of the print server 13-1 via the calculation based on the original data, the CPU 101 of the print server 13-1 determines that the print command is valid. In this case, in step S56, the CPU 101 of the print server 13-1 controls the communication unit 109 to transmit the original data (received and spooled in step S51) to the printer 14-1.

If the printer 14-1 receives, in step S71, the original data transmitted from the print server 13-1, then in step S72 the printer 14-1 prints an image (or text) in accordance with the received original data. After the printing is completed, the process is ended.

In the process shown in Fig. 4, as described above, the signature associated with the original data specified to be printed is stored in the IC card 21, and the original data is transmitted to the print server 13. If the signature calculated by the print server 13 is identical to the signature read from the IC card 21, printing is performed. Thus, it is ensured that printing is easily performed in a highly secure manner.

In the example shown in Fig. 4, printing is performed by the print server 13-1 specified by the user (in step S11) when the IC card 21 is brought to a position close to the print server 13-1 to which the original data has been transmitted from the personal computer 12. On the other hand, if the IC card 21 is brought to a position close to the print server 13-2 that is different from the print server 13-1 to which the original data has been transmitted from the personal computer 12, printing is performed as described below with reference to a flow chart shown in Fig. 5. The flow chart of Fig. 5 shows an example of a printing process performed in a case in which the user brings the IC card 21 to a position close to the print server 13-2 different from the print server 13-1 specified in step S11 as a print server for printing the original data. This can occur when the user wants to use the print server 13-2 to perform the printing. The process shown in Fig. 5 is started when the user inputs the print command to the personal computer 12.

Steps S111 to S114 are performed by the personal computer 12 in a similar manner to step S11 to S14 shown in Fig. 4, and thus a further description of these steps is not given herein. Steps S131 and S132 performed by the IC card 21 are similar to steps S31 and S32 shown in Fig. 4, and thus a further description of these steps is not also given herein. Step S151 performed by the print server 13-1 is similar to step S51 shown in Fig. 4, and thus a further description of this step is not given herein.

After the signature and the associated data are written, in steps S131 and S132, into the IC card 21 brought by the user to a position close to the personal computer 12, the user brings the IC card 21 to a position close to a print server 13 corresponding to a printer 14 the user wants to use for printing. In the example shown in Fig. 5, the user brings the IC card 21 to a position close to the print server 13-2 different from the print server 13-1 specified in step S111. That is, for printing, the user wants to use the printer 14-2 corresponding to the print server 13-2 different from the print server 14-1 initially specified in step S111.

If the IC card reader/writer 110 (Fig. 3) of the print server 13-2 detects the IC card 21 brought to the close position, then in step S191 the IC card reader/writer 110 (Fig. 3) of the print server 13-2 issues a command to the IC card 21 to read card information from a memory (not shown) disposed in the IC card 21. Note that the signature of the original data and the associated data have been written, in step S131, in the memory of the IC card 21.

If the IC card 21 receives, in step S133, this command issued by the print server 13-2, then in step S134 the IC card 21 reads the card information, that is, the signature and the associated data (including the data indicating the print-command issue time and the print server ID) written in the memory (not shown) and transmits the card information to the IC card reader/writer 110 (Fig. 3) of the print server 13-2.

In step S192, the IC card reader/writer 110 of the print server 13-2 receives the card information including the signature and the associated data returned from the IC card 21 as a response to the command issued in step S191.

In step S193, the CPU 101 of the print server 13-2 determines whether the print server ID included in the associated data read from the IC card 21 is identical to the print server ID assigned to the present print server 13-2. That is, the CPU 101 of the print server 13-2 determines whether the print server ID included in the associated data is identical to the server ID assigned to the print server 13-2 and stored in the RAM 103. In other words, in this specific case, a determination is made as to whether the print server 13-2 is a print server in which the original data is spooled. In the example shown in Fig. 5, the print server 13-1 is a print server in which the original data is spooled, and thus the print server ID included in the associated data indicates not the print server 13-2 but the print server 13-1. That is, the print server ID (of the print server 13-1) included in the associated data is not identical to the print server ID of the print server 13-2.

In step S194, the CPU 101 of print server 13-2 requests the print server 13-1 identified by the print server ID included in the associated data read from the IC card 21 to transfer the original data. More specifically, under the control of the CPU 101, the communication unit 109 of the print server 13-2 transmits a command via the network 11 to the print server 13-1 identified by the print server ID to transfer the original data. When the command is transmitted, the communication unit 109 of the print server 13-2 extracts the print-command issue time from the associated data and transmits it to the print server 13-1 such that the print server 13-1 can identify the original data included in data spooled in the print server 13-1. The data transmitted herein is not limited to the print-command issue time, but any data may be used if the data identifies the original data.

If the CPU 101 (Fig. 3) of the print server 13-1 receives, in step S152, the request for the original data issued by the print server 13-2 via the communication unit 109, then in step S153 the CPU 101 of the print server 13-1 controls the communication unit 109 to transmit the original data spooled in step S151 to the print server 13-2 via the network 11. In the case in which two or more original data are spooled in the print server 13-1, the CPU 101 of the print server 13-1 selects original data whose print-command issue time is identical to the print-command issue time notified by the print server 13-2 and controls the communication unit 109 to transmit the selected original data to the print server 13-2 via the network 11.

If the communication unit 109 of the print server 13-2 receives, in step S195, the original data transmitted by the print server 13-1, the communication unit 109 transfers the received original data to the CPU 101. The CPU 101 of the print server 13-2 spools the received original data. In step S196, the CPU 101 of print server 13-2 calculates (generates) a signature based on the original data received in step S195. The calculation of the signature associated with the original data is performed in a similar manner to the calculation described earlier. Note that a valid signature can be obtained only when the original data is valid.

In step S197, the CPU 101 of print server 13-2 compares the signature (first signature) read in step S192 from the IC card 21 with the signature (second signature) generated in step S196 by the print server 13-2 based on the original data received from the print server 13-1. If the signature (first signature) read from the IC card 21 is identical to the signature (second signature) generated by the CPU 101 of the print server 13-2 by performing the calculation based on the original data, the CPU 101 of the print server 13-2 determines that the print command is valid. In this case, in step S198, the CPU 101 of the print server 13-2 controls the communication unit 109 to transmit the original data (received and spooled in step S192) to the printer 14-2.

If the printer 14-2 receives, in step S201, the original data transmitted from the print server 13-2, then in step S202 the printer 14-2 prints an image (or text) in accordance with the received original data. After the printing is completed, the process is ended.

In the process shown in Fig. 5, as described above, when the print server ID read from the IC card 21 is different from the ID assigned to the print server 13, the print server 13 acquires original data from another print server 13 in which the original data is spooled and prints the acquired original data. Thus, it is possible to perform printing using a printer different from an initially specified printer 14.

Because the print server ID is written in the IC card 21, it is possible to easily identify the print server 13 in which the original data to be printed is spooled.

Furthermore, when the user wants to perform printing at a location different from an initially specified location, a print server 13 at the new location acquires the original data to be printed by performing searching over the network 11, and thus it is possible to perform printing at a desirable location. The user can specify the location at which printing is performed when the printing is actually performed.

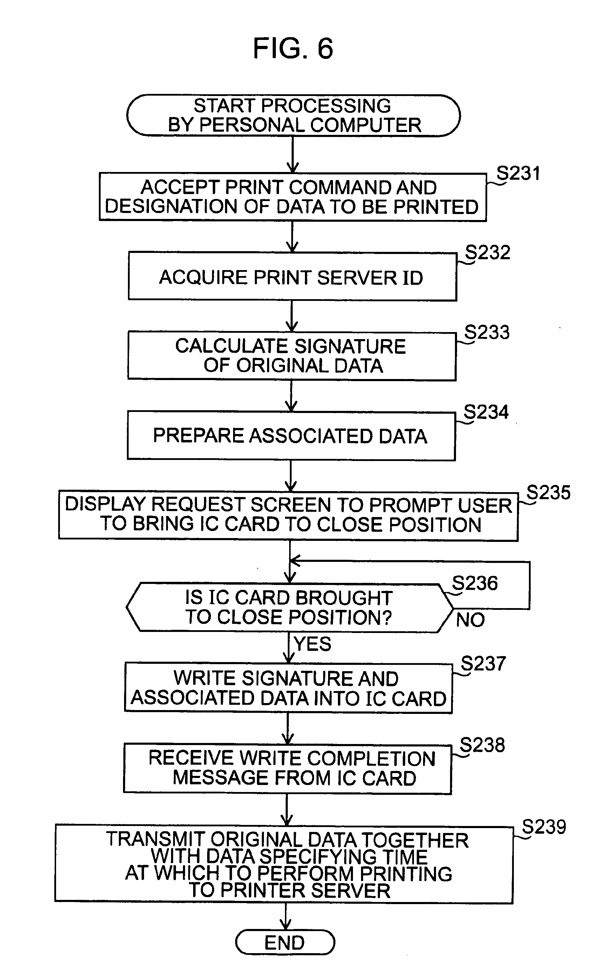

Now, referring to a flow chart shown in Fig. 6, the process performed by the personal computer 12 shown in Fig. 2 is described. The flow chart of Fig. 6 shows in detail the process performed by the personal computer 12 shown in Fig. 4 or 5.

In step S231, the input unit 56 receives data specifying original data and a print command issued by a user. For example, if the user issues a print command to print a file displayed on the display of the output unit 57 of the personal computer 12, the print command is accepted via the input unit 56. When the print command is input, a command specifying a print server 13 (or a printer 14) and a print-command issue time may also be input via the input unit 56. When a print server 13 or a print-command issue time is not specified by the user, a default print server 13 is selected.

In step S232, the CPU 51 acquires the print server ID corresponding to the print server 13 specified in step S231 (or corresponding to the default print server 13). In the RAM 53 of the personal computer 12, print server IDs identifying print servers 13 connected to the personal computer 12 via the network 11 are stored in the form of a table, and the CPU 51 acquires the ID of the specified print server 13 from the table stored in the RAM 53.

In step S233, the CPU 51 calculates (generates) the signature associated with the original data. More specifically, the CPU 51 calculates (generates) the signature associated with the original data by applying a particular function to the data (the original data) specified by the user to be printed. The calculation of the signature is accomplished by using a function that generates a signature that changes if a change occurs in data to which the function is applied. Specific examples of such functions are a CRC (Cyclic Redundancy Check) function and one-way hash function.

In step S234, the CPU 51 prepares (sets) associated data including the print server ID and the print-command issue time.

In step S235, the CPU 51 displays a message on a screen of the output unit (serving as the display) 57 to prompt the user to bring the IC card 21 to a close position. In response to the message displayed on the output unit 57, the user brings the IC card 21 to a position close to the IC card reader/writer 60 of the personal computer 12.

In step S236, the IC card reader/writer 60 determines whether the IC card 21 has been brought by the user to a position close to the IC card reader/writer 60. If not, the process waits in step S236 until the IC card 21 is brought to a close position.

If it is determined in step S236 that the IC card 21 has been brought to a close position, then in step S237, under the control of the CPU 51, the IC card reader/writer 60 issues a command to the IC card 21 to write the signature calculated (generated) in step S233 and the associated data (including at least the print server ID and the print-command issue time) prepared in step S234 into the IC card 21.

In response to the command, the IC card 21 writes (stores) the signature and the associated data into a built-in memory (not shown) thereof and returns a write-completion message to the IC card reader/writer 60 of the personal computer 12 to notify that writing of the signature and the associated data has been successfully completed.

In step S238, the IC card reader/writer 60 receives the write-completion message transmitted by the IC card 21.

In step S239, under the control of the CPU 51, the communication unit 59 transmits, via the network 11, the original data specified in step S231 and the data indicating the print-command issue time to the print server 13 specified in step S231. That is, the original data is transmitted to the print server 13 corresponding to the print server ID acquired in step S232, and information associated with the print server ID is stored in the IC card 21. Thereafter, the process is ended.

In the process shown in Fig. 6, the signature and the associated data corresponding to the original data are stored in the IC card 21, and the original data is transmitted to the print server 13 to be used.

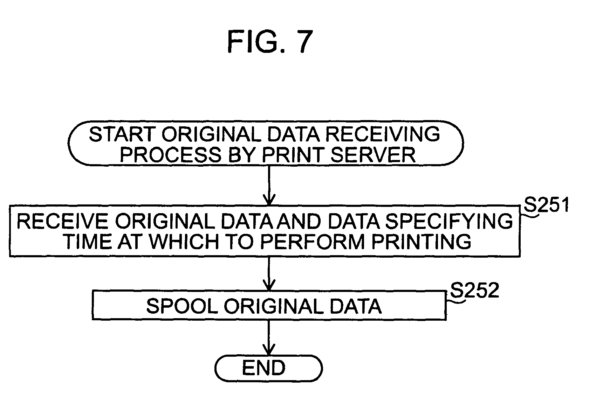

Now, referring to a flow chart shown in Fig. 7, the process performed by the print server 13 shown in Fig. 3 to receive the original data is described. The flow chart of Fig. 7 shows in detail the process performed by the print server 13-1 shown in Fig. 4 or 5. This process is performed by the print server 13, for example, in step S239 shown in Fig. 6.

In step S251, the communication unit 109 of the print server 13 receives the original data and the print-command issue time transmitted (in step S239 shown in Fig. 6) from the personal computer 12 via the network 11.

In step S252, the CPU 101 spools the received original data in the RAM 103. By spooling, the original data is not directly transmitted to the printer 14-1 but is temporarily stored in the print server 13-1 before it is transmitted to the printer 14-1, that is, the original is put in a queue. The CPU 101 stores the received print-command issue time in connection with the original data. Thereafter, the process is ended.

In the process shown in Fig. 7, the original data received from the personal computer 12 is spooled in connection with the print-command issue time.

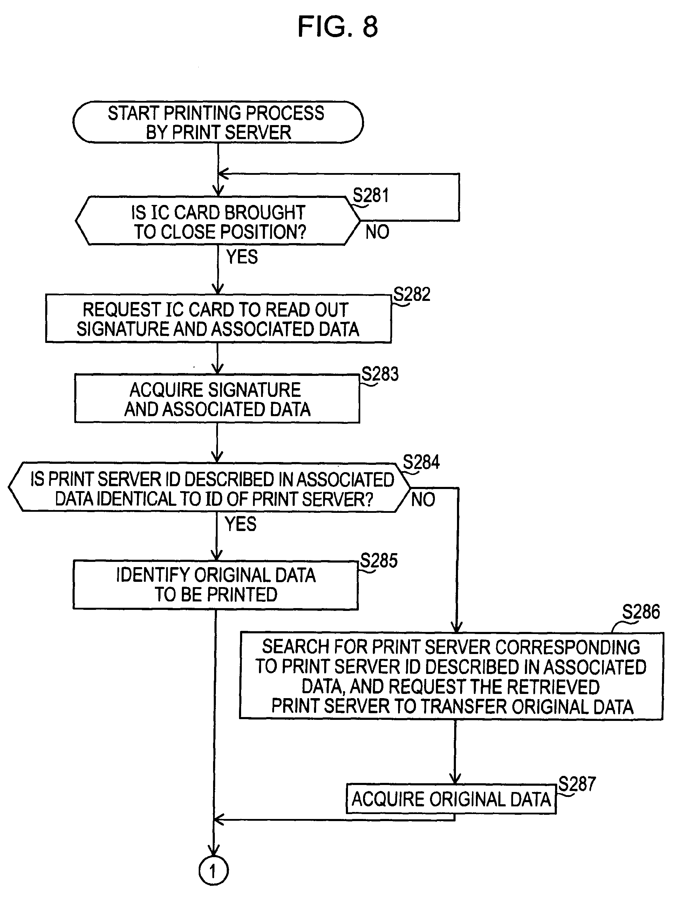

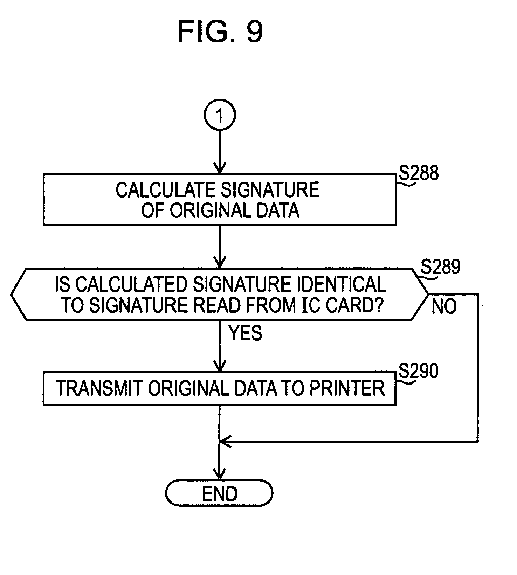

Next, referring to a flow chart shown in Fig. 8 and Fig. 9, the printing process performed by the print server 13 shown in Fig. 3 is described. Figs. 8 and 9 show flow charts of a sequence of processing steps performed by the print server 13-1 and the print server 13-2 shown in Figs. 4 and 5.

In step S281, the IC card reader/writer 110 determines whether the IC card 21 has been brought to a position close to the IC card reader/writer 110. If not, the process waits in step S281 until the IC card 21 is brought to a close position. That is, the process shown in Figs. 8 and 9 starts when the IC card 21 is brought to a close position.

If it is determined in step S281 that the IC card 21 has been brought to a close position, then in step S282, under the control of the CPU 101, the IC card reader/writer 110 issues a command to the IC card 21 to read card information including signature and associated data stored in the memory disposed in the IC card 21. Note that the signature of the original data and the associated data have been written, in step S237 in Fig. 6, in the memory of the IC card 21.

In response to the request issued in step S282 by the print server 13, the IC card 21 reads the signature and the associated data from the memory (not shown) and transmits them to the IC card reader/writer 110 of the print server 13.

In step S283, if the IC card reader/writer 110 acquires the signature and the associated data (card information) transmitted by the IC card 21, the IC card reader/writer 110 transfers them to the CPU 101.

In step S284, the CPU 101 determines whether the print server ID included in the associated data acquired from the IC card 21 is identical to the print server ID assigned to the print server (hereinafter, referred to as the present print server) that has received the signature and the associated data. If the print server ID included in the associated data acquired from the IC card 21 is identical to the print server ID assigned to the present print server 13, this means that the original data to be printed is spooled in this print server 13 (as with the print server 13-1 shown in Fig. 4). On the other hand, if the print server ID included in the associated data acquired from the IC card 21 is not identical to the print server ID assigned to the present print server 13, this means that the original data to be printed is not spooled in this print server 13 (as with the print server 13-2 shown in Fig. 5).

If it is determined in step S284 that the print server ID included in the associated data acquired from the IC card 21 is identical to the print server ID assigned to the present print server 13, the process proceeds to step S285, in which the CPU 101 identifies the original data to be printed. In this case, because the original data requested by the IC card 21 brought to the close position has already been spooled in the present print server 13 via the process shown in Fig. 7, the CPU 101 can find the original data to be printed (the original data based on which to produce a printed matter) from data spooled in the present print server 13. In the case in which two or more original data are spooled in the present print server 13, the CPU 101 checks the print-command issue time associated with each spooled original data and selects original data whose print-command issue time is identical to the print-command issue time described in the associated data acquired from the IC card 21. The selected original data is identified as the original data to be printed.

On the other hand, if it is determined in step S284 that the print server ID included in the associated data acquired from the IC card 21 is not identical to the print server ID assigned to the present print server 13, the process proceeds to step S286, in which the CPU 101 requests another print server 13 (hereinafter, for the convenience of explanation, it is assumed that this print server is the print server 13-1 as in the example shown in Fig. 5, although this print server is not limited to the print server 13-1) identified by the print server ID included in the associated data acquired from the IC card 21 to transfer the original data. In the following discussion, by way of example but not limitation, it is assumed that the print server 13-2 issues a request for the original data, and the print server 13-1 receives the request, that is, it is assumed that the print server 13-2 is the requesting print server and the print server 13-1 is the requested print server. Under the control of the CPU 101, the communication unit 109 of the print server 13-2 transmits a command via the network 11 to the print server 13-1 identified by the print server ID to transfer the original data. When the command is transmitted, the CPU 101 of the print server 13-2 extracts the data indicating the print-command issue time from the associated data and transmits it to the print server 13-1 via the communication unit 109 such that, based on the print-command issue time, the print server 13-1 can correctly select the original data included in data spooled in the print server 13-1.

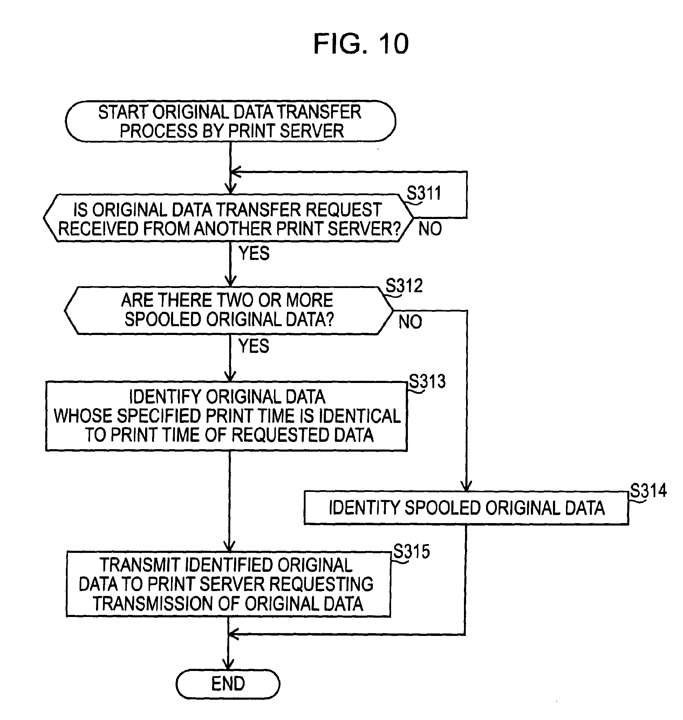

If the print server 13-1 receives the request command via the communication unit 109, the print server 13-1 transmits, from the communication unit 109 and via the network 11, the specified original data spooled in the print server 13-1 to the print server 13 that has requested transmission of the original data. In the case in which two or more original data are spooled in the print server 13, the CPU 101 of the print server 13-1 selects original data whose print-command issue time is identical to the print-command issue time described in the data transfer command and controls the communication unit 109 to transmit the selected original data to the print server 13-2 via the network 11 (via a process that will be described later with reference to Fig. 10).

In step S287, the communication unit 109 of the print server 13-2 acquires the original data and transfers the acquired original data to the CPU 101 of the print server 13-2. The CPU 101 spools the received original data in the RAM 103.

Via the process to step S285 or step S287, the original data specified by the associated data read from the IC card 21 is spooled in the print server 13-2.

After the completion of step S285 or step S287, the process proceeds to step S288. In step S288, the CPU 101 of the print server 13-2 calculates a signature based on the original data identified in step S285 or the original data received in step S287. The calculation of the signature associated with the original data is performed in a similar manner to the calculation described earlier. Note that a valid signature can be obtained only when the original data is valid.

In step S289, the CPU 101 of the print server 13-2 determines whether the signature (first signature) read in step S283 from the IC card 21 is identical to the signature generated in step S288 (the second signature calculated based on the original data received from the print server 13-2). That is, the CPU 101 checks the signature to determine whether the print command is valid.

If it is determined in step S289 that the signature (first signature) read from the IC card 21 is identical to the signature (second signature) generated in step S288, then in step S290, the CPU 101 of the print server 13-2 controls the communication unit 109 to transmit the original data (identified in step S285 or acquired in step S287) to the printer 14. That is, the original data specified in step S288 as data to be printed is transmitted to the printer 14.

If the printer 14 receives the original data transmitted from the print server 13-2, the printer 14 prints an image (or text) in accordance with the received original data.

The process is ended if the transmission of the original data in step S290 is completed or if it is determined in step S289 that the signature read from the IC card 21 is not identical to the calculated signature.

In the process shown in Figs. 8 and 9, as described above, the signature written in the IC card 21 is compared with the signature calculated based on the original data to ensure that printing is performed in a more secure fashion.

Now, referring to a flow chart shown in Fig. 10, the process performed by the print server 13 shown in Fig. 3 to transfer the original data is described. The flow chart of Fig. 10 shows in detail the process performed by the print server 13 (the print server 13-1 in the specific example shown in Fig. 5). This process is performed in response to execution of the process by another print server 13 in step S286 shown in Fig. 8. This process is performed after the process shown in Fig. 7. That is, the process starts in a state in which there is at least one original data spooled in the print server 13.

In step S311, the CPU 101 of the print server 13 determines whether a request to transfer original data issued by another print server 13 has been received via the communication unit 109 (and also via the network 11). If the request has not been yet received, the process waits in step S311 until the request has been received. For example, when another print server 13 (for example, the print server 13-2 (hereinafter, referred to as the requesting print server 13-2)) issues an original data transfer request to a print server 13 (for example, the print server 13-1 (hereinafter, referred to as the requested print server 13-1)) in step S286 shown in Fig. 8, the determination in step S311 is made affirmatively. The request for original data includes associated data such as data indicating print-command issue time. In the following discussion, by way of example but not limitation, it is assumed that the print server 13-2 issues the original data transfer request to the print server 13-1, that is, it is assumed that the print server 13-2 is the requesting print server and the print server 13-1 is the requested print server.

If it is determined in step S311 that the original data transfer request issued by the requesting print server 13-2 has been received, then in step S312 the CPU 101 of the requested print server 13-1 further determines whether there are two or more spooled original data. Note that when the request for original data is issued by the requesting print server 13-2, the process shown in Fig. 7 has already been performed by this print server 13-2, and there is at least one original data spooled in the print server 13-2. Thus, in this step S312, it is determined whether there are two or more spooled original data.

In the case in which it is determined in step S312 that there are two or more spooled original data, the process proceeds to step S313. In step S313, the CPU 101 of the requested print server 13-1 selects, from two or more spooled original data, original data whose print-command issue time is identical to the print-command issue time described in the data transfer request issued by the requesting print server 13-2. More specifically, the CPU 101 of the requested print server 13-1 searches the original data spooled in the requested print server 13-1 to find original data whose print-command issue time is equal to the print-command issue time described in the original-data transfer request received from the requesting print server 13-2. If such original data is detected, the CPU 101 of the requested print server 13-1 determines that the detected original data is that requested by the requesting print server 13-2. Although in the present example, the original data is identified based on the print-command issue time, the original data may be identified based on another data if it can identify the original data.

In the case in which it is determined in step S312 that only one original data is spooled, the process proceeds to step S314. In step S314, the CPU 101 of the requested print server 13-1 identifies the spooled original data. That is, the CPU 101 of the requested print server 13-1 determines that the spooled original data, which is sole spooled original data in the present status, is the original data requested by the requesting print server 13-2.

Thus, via the process to step S313 or S314, original data requested by a requesting print server (the print server 13-2, in the present example) is identified. Although in the process shown in Fig. 10, the determination as to the equality in terms of the print-command issue time is made only when there are two or more spooled original data, the determination may be made also when there is only one spooled original data (that is, also when the answer to step S312 is no). That is, the determination is made as to whether the print-command issue time of the sole spooled original data is identical to the print-command issue time described in the data transfer request, and the spooled original data is determined as the correct one only if the result of the determination as to the equality in terms of the print-command issue time is affirmative.

After the completion of step S313 or step S314, the process proceeds to step S315. In step S315, The CPU 101 of the requested print server 13-2 transmits the original data identified via previous steps to the requesting print server 13-2. Thereafter, the process is ended.

In the process shown in Fig. 10, as described above, in response to receiving a request for transmission of original data from a print server (for example, the print server 13-2), the requested original data is transmitted to the requesting print server from a requested print server (for example, the print server 13-1).

In the above-described process according to the embodiment of the invention, printing is performed in such a manner that the personal computer 12 writes the signature of the original data to be printed into the IC card 21 and transmits the original data (in the form of electronic data) to the requesting print server (print server 13-2). The requesting print server 13-2 calculates the signature based on the received original data and checks whether the signal read from the IC card 21 is identical to the calculated signature. If they are identical to each other, the print server 13-2 performs printing based on the original data. Thus, it is ensured that the original data is protected from being leaked out and/or being tampered with.

The print server ID written in the IC card 21 makes it possible to easily identify the print server (for example, the print server 13-1) in which the original data is spooled.

Even when a user changes the location where printing is to be performed after the user issues the print command, a print server 13 (for example, the print server 13-2) can acquire original data specified by the user to be printed by performing searching over the network 11. This allows the user to perform printing at a desired location. The user can specify the location at which to perform printing, when the printing is actually performed.

In the personal computer 12, the original data may be encrypted using an encryption key, and the encryption key used in the encryption may be written in the IC card 21. The print server 13 may acquire the original data in the initial form by performing decryption using the encryption key read from the IC card 21. This makes it possible to prevent the original data spooled in the print server 13 and the original data transferred (or being transferred) via the network 11 from being leaked out or tampered with.

More specifically, for example, after the signature is calculated in step S11 in Fig. 4, the personal computer 12 encrypts the original data by using the encryption key K. Thereafter, in step S12, the personal computer 12 writes the encryption key K together with the signature and the print server ID into the IC card 21. In step S14, the personal computer 12 transmits the encrypted original data. The encryption of the original data transmitted over the network 11 makes it possible to protect the original data in a more secure fashion. In step S51, the print server 13 receives the encrypted original data. In step S53, the signature, the print server ID, and the encryption key K are read from the IC card 21. The print server 13 acquires the original data in the initial form by decrypting the encrypted original data by using the encryption key K. Thus, it is possible to prevent the spooled original data or the original data being transmitted from being leaked out or tampered with.

The user only needs to simply manage the signature written in the IC card 21 until the printing is completed and does not need to further mange the signature for a long time. This makes it possible to easily manage the signature. When there are two or more original data, signatures associated with them are different. Therefore, even if some signatures written in the IC card 21 is stolen, original data other than that corresponding to the stolen signature are still prevented from being leaked out.

In a technique, authentication information is written in advance in an IC card and the authentication information is transmitted together with original data to a print server. In this technique, printing is performed by the print server only when the received authentication information is identical to the authentication information read from the IC card. To prevent the authentication information, a key is used. However, it is necessary to manage the key such that the key is kept secret. Besides, if the IC card 21 is lost, a very complicated process is needed to re-issue the key. In contrast, in the embodiment according to the present invention, required management is very simple and easy, and printing can be performed in a highly secure fashion.

Even in a state in which original data has been transmitted to a particular print server, another different print server can acquire the original data via the network 11 and can perform printing according to the acquired original data. This makes it possible to perform printing not only at limited locations in a company but also at a location outside the company.

In a technique in which a common key or an SSL (Secure Sockets Layer) is used to protect original data from being leaked out or tampered with during the original data is transmitted over a communication line, the original data is protected only when it is transmitted over the communication line, and the original data is not protected when it is spooled in a print server. In contrast, in the technique according to one of embodiments of the present invention, printing of original data is allowed only when the signature associated with the original data is found to be valid, and thus the original data is protected also in a state in which the original data is spooled in a print server 13.

Note that the structure of the personal computer 12 is not limited to that used in the embodiments described above, but the personal computer 12 may be constructed in a different manner as long as the personal computer 12 includes the IC card reader/writer 60 and it can perform various processes described above. Similarly, the structure of the print server 13 is not limited to that used in the embodiments described above, but the print server 13 may be constructed in a different manner as long as the print server 13 includes the IC card reader/writer 110 and has the spooling capability.

Although in the embodiments described above, authentication is performed using the signature, a random number or data which cannot be easily guessed may be used instead of the signature. In this case, the personal computer 12 generates a random number or a value that cannot be easily guessed and transmits it together with the print data (the original data) to the print server 13 and the IC card 21. Authentication of the original data is performed by checking whether the value attached to the original data is valid in a manner similar to the manner in which the signature is checked in the above-described embodiments.

Although in the embodiments described above, the associated data includes data indicating the print-command issue time and the print server ID, the associated data may instead include computer identification information, a title of the original data (in the form of electronic data), an IP address of the print server 13, and/or printer identification data.

The information used to identify the print server 13 is not limited to the print server ID, but other information such as an IP address of the print server 13 may be used as long as it can identify the print server 13.

In the embodiments of the present invention, unlike a technique in which authentication between the personal computer 12 that issues the print command and the print server 13 is performed using a password or the like, the feature of the original data is extracted and the validity is determined based on the extracted feature, and thus, to perform printing, the user only needs to bring the IC card 21 to a position close to the print server 13 or the personal computer 12. This makes it possible to easily perform printing in a highly secure fashion without having to register a password or the like for accessing to the print server 13.

Although in the embodiments described above, it is assumed that the print server 13 and the printer 14 are separated apparatus, they may be integrated into a single apparatus.

The IC card 21 does not need to manage an encryption key, and thus a simple memory (such as a memory card) may be used as the IC card 21. This allows a reduction in running cost of the print processing system 1.

Because authentication in the printing process can be performed based on IC card information and the associated data (such as data indicating the print-command issue time) attached to spooled original data, it is not necessary to register authentication information in the IC card 21 and the print server 13. In the case in which authentication information is registered in the IC card 21, if the IC card 21 is lost, a very complicated process is needed to re-issue an IC card 21. In contrast, in the embodiments according to the present invention, required management is very simple and easy.

Even in the case in which the location at which to perform printing is changed after the print command is issued, the original data to be printed can be acquired at the desired location where printing is performed by performing searching over the network 11. That is, the location at which printing is performed can be specified when printing is actually performed.

The sequence of processing steps described above may be performed by means of hardware or software. In the case in which the processing sequence is executed by means of software, the processing sequence may be executed on the personal computer 12 shown in Fig. 2 or the print server 13 shown in Fig. 3. When the processing sequence is executed by software, a program forming the software may be installed from a storage medium or via a network onto a computer or a print server.

More specifically, the program may be stored on a removable storage medium (such as a removable storage medium 81 shown in Fig. 2) in the form of a package medium and may be supplied to a user separately from the computer. The program may also be supplied to the user by preinstalling it on a built-in ROM 52 or a storage unit 58 such as a hard disk disposed in the computer. This also holds for the print server 13 shown in Fig. 4.

In the present description, the steps described in the program may be performed either in time sequence in accordance with the order described in the program or in a parallel or separate fashion.

In the present description, the term "system" is used to describe a total set of a plurality of apparatus.

It should be understood by those skilled in the art that various modifications, combinations, sub-combinations and alterations may occur depending on design requirements and other factors insofar as they are within the scope of the appended claims or the equivalents thereof.

## Claims

1. A print processing system including an information processing apparatus (12) and a print server (13-1) adapted to communicate with the information processing apparatus via a network (11),
the information processing apparatus (12) including
first signature generation means (51) for generating, in accordance with a print command issued by a user, a first signature from original data in the form of electronic data according to which to perform printing;
writing means (60) for writing the first signature generated by the first signature generation means into an IC card; and
transmission means (59) for transmitting the original data to the print server (13-1) via the network (11);
the print server (13-1) including
receiving means (109) for receiving the original data transmitted from the transmission means (59);
reading means (110) for reading the first signature written in the IC card;
second signature generation means (101) for generating a second signature from the original data received by the receiving means (109);
first determination means (101) for determining whether the first signature read by the reading means (110) is identical to the second signature generated by the second signature generation means (101); and
print control means (101) for controlling a printer such that the printer prints the original data received by the receiving means (109) if the first determination means (101) determines that the first signature is identical to the second signature.

2. A print processing system according to Claim 1, wherein:
the writing means of the information processing apparatus further writes, into the IC card, associated information including a print server ID identifying the print server to which the original data is transmitted by the transmission means;
the print server (13-2) further includes
second determination means (101) for determining whether the print server ID included in the associated information read by the reading means (110) from the IC card is identical to the print server ID of the present print server (13-2), and
acquisition means (101) for, when the second determination means (101) makes a negative determination as to the equivalence of the print server IDs, acquiring the original data via the network (11) from a print server identified by the print server ID included in the associated information read by the reading means from the IC card,
the second signature generation means (101) generates a second signature from the original data acquired by the acquisition means (101);
the first determination means (101) determines whether the first signature is identical to the second signature; and
the print control means (101) controls a printer such that the printer prints the original data acquired by the acquisition means (101) if the first determination means (101) determines that the first signature is identical to the second signature.

3. A print processing system according to Claim 1, wherein:
the first signature generation means (51) generates the first signature by applying a hash function to the original data; and
the second signature generation means (101) generates the second signature by applying the hash function to the original data.

4. A print processing system according to Claim 1, wherein
the information processing apparatus (12) further includes encryption means for encrypting the original data using a first key;
the print server further includes decryption means for decrypting the original data encrypted by the encryption means, by using the first key;
the writing means (60) further writes the first key into the IC card;
the transmission means (59) transmits the original data encrypted by the encryption means;
the receiving means (109) of the print server receives the encrypted original data;
the reading means (110) reads the first key written in the IC card, and
the decryption means decrypts the encrypted original data by using the first key read by the reading means.

5. A print processing system according to Claim 1, wherein the print server further includes the printer.

6. A method of performing a printing process in a print processing system (1) including an information processing apparatus (12) and a print server (13-1) adapted to communicate with the information processing apparatus (12) via a network (11), the printing process including a process performed by the information processing apparatus (12) and a process performed by the print server (13-1),
the process performed by the information processing apparatus (12) including the steps of
generating, in accordance with a print command issued by a user, a first signature from original data in the form of electronic data according to which to perform printing;
writing the first signature generated in the first signature generation step into an IC card; and
transmitting the original data to the print server via the network;
the process performed by the print server including the steps of
receiving the original data transmitted in the transmission step;
reading the first signature written in the IC card;
generating a second signature from the original data received in the receiving step;
determining whether the first signature read in the reading step is identical to the second signature generated in the second signature generation step; and
controlling a printer such that the printer prints the original data received in the receiving step if it is determined in the determination step that the first signature is identical to the second signature.

7. An information processing apparatus (12) adapted to communicate with a print server (13-1) via a network (11), comprising:
signature generation means (51) for generating, in accordance with a print command issued by a user, a signature from original data in the form of electronic data according to which to perform printing;
writing means (60) for writing the signature generated by the signature generation means (51) into an IC card; and
transmission means (59) for transmitting the original data to the print server (13-1) via the network (11).

8. An information processing apparatus according to claim 7, wherein the signature generation means (51) generates the signature by applying a hash function to the original data.

9. An information processing apparatus according to claim 7, further comprising encryption means for encrypting the original data using a particular encryption key, wherein
the writing means (60) further writes the encryption key into the IC card; and
the transmission means transmits the original data encrypted by the encryption means to the print server.

10. A method of performing information processing in an information processing apparatus (12) adapted to communicate with a print server (13-1) via a network (11), the information processing comprising the steps of:
generating, in accordance with a print command issued by a user, a signature from original data in the form of electronic data according to which to perform printing;
writing the signature generated in the signature generation step into an IC card; and
transmitting the original data to the print server (13-1) via the network (11).

11. A program that causes a computer to execute a process including communication with a print server (13-1) via a network (11), the process comprising the steps of:
generating, in accordance with a print command issued by a user, a signature from original data in the form of electronic data according to which to perform printing;
writing the signature generated in the signature generation step into an IC card; and
transmitting the original data to the print server via the network.

12. A print server (13) adapted to communicate with an information processing apparatus (12) via a network (11), comprising:
receiving means (109) for receiving original data in the form of electronic data according to which to perform printing, from the information processing apparatus (12) via the network (11);
reading means (110) for reading a first signature corresponding to the original data from an IC card;
signature generation means (101) for generating a second signature from the original data received by the receiving means (109);
first determination means (101) for determining whether the first signature read by the reading means (110) is identical to the second signature generated by the signature generation means (101); and
print control means (101) for controlling a printer such that the printer prints the original data received by the receiving means if the first determination means determines that the first signature is identical to the second signature.

13. A print server according to Claim 12, wherein:
the reading means (110) further reads, from the IC card, associated information including a print server ID identifying the print server to which the original data is transmitted;
the print server (13) further includes
second determination means (101) for determining whether the print server ID included in the associated information read by the reading means (110) from the IC card is identical to the print server ID of the present print server (13), and
acquisition means (101) for, when the second determination means (101) makes a negative determination as to the equivalence of the print server IDs, acquiring the original data via the network from a print server identified by the print server ID included in the associated information read by the reading means (110) from the IC card,
the signature generation means (101) generates a second signature from the original data acquired by the acquisition means (101);
the first determination means (101) determines whether the first signature is identical to the second signature; and
the print control means (101) controls a printer such that the printer prints the original data acquired by the acquisition means if the first determination means (101) determines that the first signature is identical to the second signature.

14. A print server according to Claim 12, wherein the signature generation means (101) generates the second signature by applying a hash function to the original data.

15. A print server according to Claim 12, further comprising decryption means for decrypting, using an encryption key, the original data encrypted using the encryption key, wherein
the receiving means (109) receives the original data encrypted using the encryption key,
the reading means (110) reads the encryption key written in the IC card, and
the decryption means decrypts the encrypted original data by using the encryption key read by the reading means.

16. A print server according to Claim 12, further comprising the printer.

17. A method of performing information processing in a print server (13-1) adapted to communicate with an information processing apparatus (12) via a network (11), the information processing comprising the steps of:
receiving original data in the form of electronic data according to which to perform printing, from the information processing apparatus (12) via the network (11);
reading a first signature corresponding to the original data from an IC card;
generating a second signature from the original data received in the receiving step;
determining whether the first signature read in the reading step is identical to the second signature generated in the signature generation step; and
controlling a printer such that the printer prints the original data received in the receiving step if it is determined in the determination step that the first signature is identical to the second signature.

18. A program that causes a computer to execute a process including communication with an information processing apparatus (12) via a network (11), the process comprising the steps of:
receiving original data in the form of electronic data according to which to perform printing, from the information processing apparatus (12) via the network (11);
reading a first signature corresponding to the original data from an IC card;
generating a second signature from the original data received in the receiving step;
determining whether the first signature read in the reading step is identical to the second signature generated in the signature generation step; and
controlling a printer such that the printer prints the original data received in the receiving step if it is determined in the determination step that the first signature is identical to the second signature.
